## Europäisches Patentamt
## European Patent Office
## Office européen des brevets

(11) Veröffentlichungsnummer: **0 130 971**
**B1**

(12) # EUROPÄISCHE PATENTSCHRIFT

(45) Veröffentlichungstag der Patentschrift:
**20.11.86**

(51) Int. Cl.⁴: **F 16 H 1/48**

(21) Anmeldenummer: **84890125.2**

(22) Anmeldetag: **04.07.84**

(54) **Umlaufrädergetriebe.**

(30) Priorität: **05.07.83 AT 2472/83**

(43) Veröffentlichungstag der Anmeldung:
**09.01.85 Patentblatt 85/2**

(45) Bekanntmachung des Hinweises auf die Patenterteilung:
**20.11.86 Patentblatt 86/47**

(84) Benannte Vertragsstaaten:
**CH DE FR GB IT LI SE**

(56) Entgegenhaltungen:
**DD - A - 25 929**
**DD - A - 35 024**
**DE - B - 1 290 401**
**FR - A - 963 414**
**GB - A - 1 025 587**
**US - A - 1 061 677**

(73) Patentinhaber: **VOEST-ALPINE Aktiengesellschaft,
Friedrichstrasse 4, A-1011 Wien (AT)**

(72) Erfinder: **Krassnitzer, Otto, Giesserriegel 11,
A-8740 Zeltweg (AT)**

(74) Vertreter: **Haffner, Thomas M., Dr. et al,
Patentanwaltskanzlei Dipl.-Ing. Adolf Kretschmer Dr.
Thomas M. Haffner Schottengasse 3a, A-1014 Wien (AT)**

## Beschreibung

Bei einem Umlaufrädergetriebe mit einem Sonnenrad, einem Hohlrad und an einem koaxial dem Sonnenrad und Hohlrad angeordneten Trägerteil für die Umlaufräder sind üblicherweise die Umlaufräder im Trägerteil starr gelagert. Es müssen mehrere Umlaufräder sowohl mit dem Sonnenrad als auch mit dem Hohlrad kämmen und es ist daher äusserst schwierig, die Herstellung des Umlaufrädergetriebes so präzise auszuführen, dass alle Umlaufräder gleichmässig belastet sind. Die vorliegende Erfindung bezieht sich nun auf ein solches Umlaufrädergetriebe mit einem Sonnenrad, einem Hohlrad und wenigstens zwei Umlaufrädern, welche mit einem gleichachsig mit Sonnenrad und Hohlrad gelagerten Trägerteil verbunden sind, wobei die Umlaufräder schwimmend zwischen Sonnenrad und Hohlrad an Lagerbolzen gelagert sind und die Lagerbolzen mittels in Umfangsrichtung des Umlaufrädergetriebes und beiden Seiten gerichteten Zug- und Druckstreben an Verbindungsbolzen angelenkt sind, die mit Spiel mit dem Trägerteil verbunden sind. Aus der DD-PS 35 024 ist ein Umlaufrädergetriebe dieser Art bekannt geworden. Bei dieser bekannten Anordnung sind die Verbindungsbolzen im Trägerteil mit allseitigem Spiel gelagert und federnd abgestützt. Durch diese federnde Abstützung wird wohl erreicht, dass die Zähne aller Umlaufräder in Eingriff mit den Zähnen des Sonnenrades und des Hohlrades gehalten werden. Um dies zu erreichen, müssen aber bei Herstellungsungenauigkeiten die federnden Elemente, durch welche die einzelnen Verbindungsbolzen in ihrer Lage gehalten werden, in ungleichem Ausmass deformiert werden, da durch die Deformation der Federelemente die Ungenauigkeiten der Herstellung ausgeglichen werden sollen. Die stärker deformierten Federelemente ergeben nun einen grösseren Flankendruck der Zähne als die weniger stark deformierten Federelemente und es ist daher auf diese Weise eine Vergleichmässigung des Flankendruckes der eingreifenden Zähne nicht möglich. Es wird vielmehr der Ausgleich dadurch geschaffen, dass eine ungleichmässige Belastung der Zahnflanken in Kauf genommen wird. Für Umlaufrädergetriebe zur Übertragung von grossen Leistungen ist eine Anordnung, bei welcher die Verbindungsbolzen federnd am Trägerteil abgestützt sind, nicht brauchbar.

Aufgabe der Erfindung ist es, bei einem Getriebe der eingangs genannten Art einen gleichen Flankendruck bei den Zähnen aller Umlaufräder zu gewährleisten. Zur Erfüllung dieser Aufgabe besteht die Erfindung im wesentlichen darin, dass die Verbindungsbolzen am Trägerteil in Umfangsrichtung unverschieblich gelagert und in radialer Richtung mit radialem Spiel geführt sind. Dadurch, dass die Verbindungsbolzen in radialer Richtung mit radialem Spiel geführt sind und sich daher in radialer Richtung einstellen können, wird die Lage der Umlaufräder zwischen Sonnenrad und Hohlrad so eingestellt, dass die Zahnflanken aller Umlaufräder mit den Zahnflanken des Sonnenrades und des Hohlrades in richtigem Eingriff gehalten werden und dadurch, dass die Verbindungsbolzen in Umfangsrichtung unverschiebbar gelagert sind, wird eine unmittelbare Kraftübertragung von den Verbindungsbolzen über die Streben auf die Lagerbolzen der Umlaufräder erreicht. Es wird somit auf diese Weise der Flankendruck der Zähne bei allen Umlaufrädern gleichgehalten und alle Umlaufräder werden somit gleich belastet.

Gemäss der Erfindung ist die Konstruktion vorzugsweise so durchgeführt, dass der Trägerteil radiale Schlitze aufweist, in welchen die Verbindungsbolzen mit ebenen Führungsflächen geführt sind, wobei die ebenen Führungsflächen der Verbindungsbolzen vorzugsweise eine radiale Erstreckung aufweisen, welche grösser ist als der Durchmesser der Verbindungsbolzen, an welchen die Zug- und Druckstreben angelenkt sind. Dadurch wird eine verschleissarme Führung der Verbindungsbolzen im Trägerteil ermöglicht. Dadurch, dass die Verbindungsbolzen ebene Führungsflächen aufweisen, wird der Flächendruck und damit der Verschleiss verringert. Wenn die ebenen Führungsflächen der Verbindungsbolzen in radialer Richtung grösser bemessen sind als der Durchmesser der Bolzen, an welchen die Zug- und Druckstreben angelenkt sind, wird der Flächendruck und damit der Verschleiss sehr gering gehalten.

Vorzugsweise sind gemäss der Erfindung die an den Lagerbolzen zweier benachbarter Umlaufräder angreifenden Zug- und Druckstreben an einen gemeinsamen Verbindungsbolzen angelenkt. Hierdurch wird eine einfache Konstruktion geschaffen. Auf jeden der Lagerzapfen der Umlaufräder wirkt von der einen Strebe eine Zugkraft und von der anderen Strebe eine Druckkraft. Diese beiden Kräfte bringen die Umlaufräder in eine Lage, in welcher der Zahndruck aller Umlaufräder ausgeglichen ist und die Umlaufräder gleich belastet sind.

Gemäss der Erfindung kann eine der einem Umlaufrad zugeordneten Zug- und Druckstreben mit dem Lagerbolzen desselben starr verbunden sein, während die jeweils andere Zug- und Druckstrebe an dem Lagerbolzen verdrehbar angelenkt ist. Die starre Verbindung einer der an einem Lagerbolzen angreifenden Zug- und Druckstreben ist deshalb ohne weiteres möglich, weil ja die jeweils andere Zug- und Druckstrebe und auch das Umlaufrad drehbar gegenüber dem Lagerzapfen sind. Dadurch, dass eine Zug- und Druckstrebe mit dem Lagerzapfen starr und winkelsteif verbunden ist, ergibt sich eine stabilere Konstruktion. In diesem Falle genügt es, die Zug- und Druckstreben einfach auszubilden, wobei an jedem Umlaufrad nur eine Zugstrebe und eine Druckstrebe angreift. Hierbei sind allerdings die Zug- und Druckstreben auf Biegung beansprucht und müssen daher entsprechend stark bemessen werden. Gemäss der Erfindung sind aber vorzugsweise die Zug- und Druckstreben von Strebenpaaren gebildet, die zu beiden Seiten der Umlaufräder an den Lagerbolzen und zu beiden Seiten des Trägerteiles an den Verbindungsbolzen angreifen. Dadurch wirken die Kräfte der Zug- und Druckstreben ausgeglichen auf die Umlaufräder und es werden Eckbeanspruchungen vermieden. Die Zug- und Druckstreben sind nicht mehr auf Biegung, sondern nur auf Zug oder Knickung beansprucht und können daher schwächer ausgebildet sein. Gemäss der Erfindung sind vorzugsweise die Verbindungsbolzen in grösserem Abstand von der Achse des Umlaufrädergetriebes angeordnet als die Achsen der Umlaufräder. Hierdurch ergibt sich eine bessere Kraftverteilung auf die Umlaufräder.

In der Zeichnung ist die Erfindung anhand von Ausführungsbeispielen schematisch erläutert.

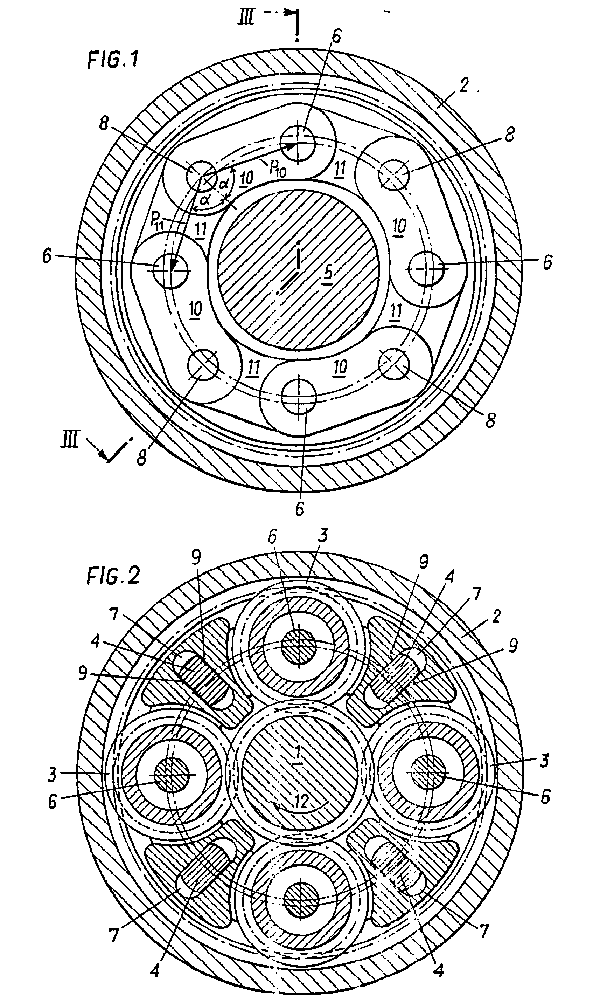

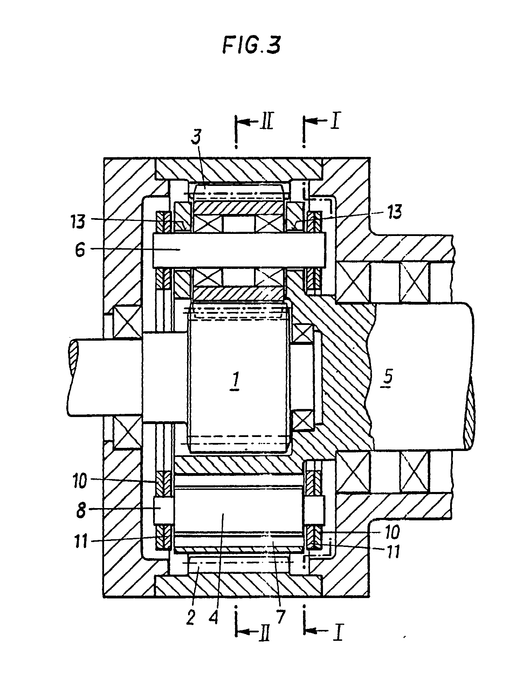

Fig. 1 zeigt einen Radialschnitt nach Linie I-I der Fig. 3,

Fig. 2 zeigt einen Radialschnitt nach Linie II-II der Fig. 3,

Fig. 3 zeigt einen Schnitt nach Linie III-III der Fig. 1.

1 ist das Sonnenrad und 2 das Hohlrad des Umlaufrädergetriebes. Es sind vier Umlaufräder 3 vorgesehen. 5 ist der Träger für die Umlaufräder 3, an welchem aber die Umlaufräder nicht unmittelbar gelagert sind. Die Umlaufräder 3 sind schwimmend zwischen dem Sonnenrad 1 und dem Hohlrad 2 an Lagerbolzen 6 gelagert. An dem Trägerkörper 5 sind in Schlitzen 7 Verbindungsbolzen 8 geführt. Die Verbindungsbolzen 8 weisen im mittleren Teil 4, in welchem sie mit grösserem Durchmesser ausgebildet sind, zwei Abflachungen 9 auf, so dass sie im Schlitz 7 radial verlagerbar mit den Abflachungen 9 geführt sind. An den Verbindungsbolzen 8 sind Zug- und Druckstreben 10 und 11 angelenkt, an deren anderem Ende die Lagerbolzen 6 der Umlaufräder gelagert sind. Wenn der Antrieb durch das Sonnenrad 1 erfolgt und das Sonnenrad 1 sich in der Richtung des Pfeiles 12 dreht, so wirken die Streben 10 als Zugstreben und die Streben 11 als Druckstreben. Unter Last wird in Drehrichtung gesehen die vor dem betreffenden Umlaufrad 3 liegende Strebe 11 zu einem Druckstab, die hinter dem Umlaufrad 3 liegende Strebe 10 zu einem Zugstab. Somit wirken auf jedes Umlaufrad 3 und auf jeden Verbindungsbolzen 8 zu beiden Seiten je eine Zugkraft $P_{10}$ und eine Druckkraft $P_{11}$. Sind diese Kräfte ungleich, so bewirkt $(P_{11} - P_{10}) \cdot \cos\alpha$ eine Verstellung des Verbindungsbolzens oder des Umlaufrades in radialer Richtung und somit einen Lastausgleich. Bei umgekehrter Drehrichtung wirken die Streben 11 als Zugstreben und die Streben 10 als Druckstreben. Dadurch, dass die Verbindungsbolzen 8 mit radialem Spiel im Trägerkörper 5 geführt sind, kann durch radiale Verlagerung des Verbindungsbolzens die Kraft gleichmässig auf die Umlaufräder 3 verteilt werden. In Umfangsrichtung besteht kein Spiel der Verbindungsbolzen 8 im Trägerkörper 5, so dass die Verbindungsbolzen 8 spielfrei durch die Umlaufräder 3 mitgenommen werden.

Alle Streben müssen mit den Verbindungsbolzen 8 drehbar verbunden sein, da ja diese Verbindungsbolzen in dem Trägerkörper 5 unverdrehbar geführt sind. Jeweils eine Strebe 10 oder 11 kann mit dem jeweiligen Lagerbolzen 6 starr und winkelsteif verbunden sein, während aber die jeweils andere Strebe 11 oder 10 mit dem Lagerbolzen 6 gelenkig drehbar verbunden ist. Die Umlaufräder 3 sitzen frei drehbar auf den Lagerbolzen. Die Streben 10 und 11 sind paarweise ausgebildet und zu beiden Seiten der Umlaufräder 3 angeordnet. Es können die Streben 10 und 11 auch einfach ausgebildet sein, wenn jeweils eine der Streben mit der Achse 6 starr verbunden ist. In diesem Falle sind aber die Streben 10 und 11 auf Biegung beansprucht und müssen daher verhältnismässig stark ausgebildet sein.

Der Trägerkörper 5 ist um die Achse des Sonnenrades 1 drehbar gelagert. Die Lagerbolzen 6 der Umlaufräder 3 sind mit radialem Spiel durch Löcher 13 des Trägerkörpers 5 hindurchgeführt, so dass sie relativ zum Trägerkörper 5 beweglich sind.

## Patentansprüche

1. Umlaufrädergetriebe mit einem Sonnenrad (1), einem Hohlrad (2) und wenigstens zwei Umlaufrädern (3), welche mit einem gleichachsig mit Sonnenrad (1) und Hohlrad (2) gelagerten Trägerteil (5) verbunden sind, wobei die Umlaufräder schwimmend zwischen Sonnenrad (1) und Hohlrad (2) an Lagerbolzen (6) gelagert sind und die Lagerbolzen (6) mittels in Umfangsrichtung des Umlaufrädergetriebes und beiden Seiten gerichteten Zug- und Druckstreben (10, 11) an Verbindungsbolzen (8) angelenkt sind, die mit Spiel mit dem Trägerteil (5) verbunden sind, dadurch gekennzeichnet, dass die Verbindungsbolzen (8) am Trägerteil (5) in Umfangsrichtung unverschieblich gelagert und in radialer Richtung mit radialem Spiel geführt sind.

2. Umlaufrädergetriebe nach Anspruch 1, dadurch gekennzeichnet, dass der Trägerteil (5) radiale Schlitze (7) aufweist, in welchen die Verbindungsbolzen (8) mit ebenen Führungsflächen (9) geführt sind, wobei die ebenen Führungsflächen der Verbindungsbolzen vorzugsweise eine radiale Erstreckung aufweisen, welche grösser ist als der Durchmesser der Verbindungsbolzen, an welchen die Zug- und Druckstreben angelenkt sind.

3. Umlaufrädergetriebe nach Anspruch 1 oder 2, dadurch gekennzeichnet, dass die an den Lagerbolzen (6) zweier benachbarter Umlaufräder (3) angreifenden Zug- und Druckstreben (10, 11) an einem gemeinsamen Verbindungsbolzen (8) angelenkt sind.

4. Umlaufrädergetriebe nach Anspruch 1, 2 oder 3, dadurch gekennzeichnet, dass eine der einem Umlaufrad zugeordneten Zug- und Druckstreben (10 oder 11) mit dem Lagerbolzen (6) desselben starr verbunden ist, während die jeweils andere Zug- und Druckstrebe (11 oder 10) an dem Lagerbolzen (6) verdrehbar angelenkt ist.

5. Umlaufrädergetriebe nach einem der Ansprüche 1 bis 4, dadurch gekennzeichnet, dass die Zug- und Druckstreben (10, 11) von Strebenpaaren gebildet sind, die zu beiden Seiten der Umlaufräder (3) an den Lagerbolzen (6) und zu beiden Seiten des Trägerteiles (5) an den Verbindungsbolzen (8) angreifen.

6. Umlaufrädergetriebe nach einem der Ansprüche 1 bis 5, dadurch gekennzeichnet, dass die Verbindungsbolzen (8) in grösserem Abstand von der Achse des Umlaufrädergetriebes angeordnet sind als die Lagerbolzen (6) der Umlaufräder (3).

## Claims

1. Epicyclic gear train comprising a sun gear (1), an internal gear (2) and at least two planet gears (3) which are connected with a carrier (5) being journalled coaxially with the sun gear (1) and the internal gear (2), wherein the planet gears (3) are jounalled on pins (6) floatingly between the sun gear (1) and the internal gear (2), and the pins (6) are articulated at studs (8) via push and pull struts (10, 11) extending in circumferential direction of the epicyclic gear train on both sides thereof, said studs (8) being in lost-motion connection with the carrier (5), characterised in that the studs (8) are journalled at the carrier (5) immovably in circumferential direction and are guided in radial direction with radial clearance.

2. Epicyclic gear train as claimed in claim 1, characterised in that the carrier has radial slits (7) in which the studs (8) are guided with flat guiding faces (9), said flat guiding faces of the studs preferably having a radially extending length which is greater than the diameter of the studs at which the push and pull struts are articulated.

3. Epicyclic gear train as claimed in claim 1 or 2, characterised in that the push and pull struts (10, 11) engaging the pins (6) of two successive planet gears (3) are articulated at a common stud (8).

4. Epicyclic gear train as claimed in claim 1, 2 or 3, characterised in that one of the push and pull struts (10 or 11) adjoined to one planet gears is rigidly connected with its pin (6) while the other push and pull strut (11 or 10) is articulated at said pin (6).

5. Epicyclic gear train as claimed in any one of claims 1 to 4, characterised in that the push and pull struts (10, 11) are formed by strut pairs engaging the pins (6) at both sides of the planet gears (3) and engaging the studs (8) at both sides of the carrier (5).

6. Epicyclic gear train as claimed in any one of claims 1 to 5, characterised in that the studs (8) are arranged at a greater distance from the axis of the epicyclic gear train than the pins (6) of the planet gears (3).

## Revendications

1. Engrenage planétaire avec une roue centrale (1), une roue creuse (2), et au moins deux roues planétaires (3), ces dernières étant reliées à une pièce-support (5) qui est montée coaxialement avec la roue centrale (1) et la roue creuse (2), dans laquel les roues planétaires sont montées en position flottante entre la roue centrale (1) et la roue creuse (2) sur des boulons-paliers (6), ces boulons-paliers (6) étant reliés au moyen de bielles (10, 11) de traction-compression, disposées de part de d'autre et dirigées dans le sens circonférentiel de l'engrenage planétaire, à des boulons de fixaton (8), lesquels sont attachés avec du jeu à la pièce-support (5), caractérisé par le fait que les boulons de fixation (8) sur la pièce-support (5) sont montés de manière immobile dans le sens circonférentiel et sont guidés avec du jeu dans le sens radial.

2. Engrenage planétaire selon revendication 1, caractérisé par le fait que la pièce-support (5) comporte des fentes radiales (7) dans lesquelles les boulons de fixation (8) sont guidés par des faces planes (9), et dans lequel les faces planes de guidage des boulons de fixation ont préférentiellement une dimension radiale qui est plus grande que le diamètre des boulons de fixation sur lesquels sont attachées les bielles.

3. Engrenage planétaire selon revendication 1 ou 2, caractérisé par le fait que les bielles (10, 11) attachées aux boulons-paliers (6) de deux roues planétaires (3) adjacentes sont reliées à un même boulon de fixation (8).

4. Engrenage planétaire selon revendications 1, 2 ou 3, caractérisé par le fait que l'une des deux bielles (10 ou 11) associées à une roue planétaire est rigidement liée au boulon-palier (6) de ladite roue, alors que l'autre bielle (10 ou 11) est reliée au boulon-palier (6) de manière à permettre un mouvement de rotation.

5. Engrenage planétaire selon l'une des revendications 1 à 4, caractérisé par le fait que l'ensemble des bielles (10, 11) est constitué de paires de bielles qui sont attachées de part et d'autre des roues planétaires (3) aux boulons-paliers (6) et de part et d'autre de la pièce-support (5) aux boulons de fixation (8).

6. Engrenage planétaire selon l'une des revendications 1 à 5, caractérisé par le fait que les boulons de fixation (8) sont plus éloignés de l'axe de l'engrenage planétaite que ne le sont les boulons-paliers (6) des roues planétaires (3).

FIG.1

FIG.2

# FIG.3